# EUROPEAN PATENT APPLICATION

(11) **EP 4 707 140 A1**
(43) Date of publication of application: **11.03.2026**
(21) Application number: 25200464.3
(22) Date of filing: 05.09.2025
(51) Int. Cl.: B62H 5/00

(54) **MOUNT**

(30) Priority: 05.09.2024 GB 202413064
(71) Applicant: Zeal Innovation Ltd, Swansea Waterfront, Swansea SA1 8QY (GB)
(72) Inventor: Barron, Neil, Swansea, SA1 8QY (GB)
(74) Representative: Marks & Clerk LLP

(57) **Abstract**

A mount for a security device, the mount configured to releasably engage a security device having a predetermined cross-section, the mount comprising an elongated channel comprising a first portion and a second portion, the second portion adjacent the first portion along a length of the mount and separated from the first portion by a through-hole, through which a security device having the predetermined cross-section can be inserted at an angle relative to a longitudinal axis of the channel and rotated for alignment and engagement with the channel.

## Description

This invention relates to mount, and particularly to mount for mounting a security device on an elongate component of, for example, the frame of a vehicle. Such assemblies are commonly used for mounting locks on bicycle frames.

Traditional methods of carrying vehicle locks often result in inconvenience, reduced accessibility, and added bulk, which can hinder a user's mobility and comfort. This invention addresses these issues by providing a dedicated mount that integrates the lock with the vehicle, ensuring both easy access and stability during transit. The mount securely holds the lock in place, preventing accidental detachment caused by vibrations or impacts, thereby enhancing the overall safety and convenience for the user.

According to an embodiment there is provided a mount for a security device, the mount configured to releasably engage a security device having a predetermined cross-section, the mount comprising an elongated channel comprising a first portion and a second portion, the second portion adjacent the first portion along a length of the mount and separated from the first portion by a through-hole, through which a security device having the predetermined cross-section can be inserted at an angle relative to a longitudinal axis of the channel and rotated for alignment and engagement with the channel.

In an embodiment the first portion and/or the second portion of the channel are configured to provide said releasable engagement.

In an embodiment a part or all of a longitudinal length of the first portion and/or of part or all of a longitudinal length of the second portion of the channel comprises a wide portion and a narrower portion, wherein the narrower portion is further spaced away from the base of the channel than the wider portion.

By providing a narrowing width of the channel closer to the free edges of the channel way from the base of the channel the security device can be engaged more securely, yet still releasably in a snap-fit type manner. In one embodiment such a narrowing of the first and/or second channel portion is provided along the entire length of the first and/or the second channel portion. In other embodiments such a narrowing of the first and/or second channel portion is provided along only part of the length of the first and/or the second channel portion. In yet another embodiment such a narrowing of the first and/or second channel portion is provided along several parts of the length of the first and/or the second channel portion.A mount according to claim 1, 2 or 3, further comprising a retainer at one end of the channel.

In one embodiment the security device is releasably engaged by the mount solely by virtue of releasable engagement of the retainer with the security device.

In an embodiment the retainer comprises a cradle defining a space with a longitudinal axis that is orthogonal to the longitudinal axis of the mount.

In embodiments in which the security device is releaseably engaged by the retainer further releasable engagement with the security device is achieved by a narrowing of the part of the channel located on an opposite side of retainer relative to the through-hole. In this manner both parts of the security device that come to lie on the two sides of the through-hole are releasably engaged. In another embodiment further releseable engagement is provided.

In embodiments the cradle further comprises a protrusion at a distal end of the channel and projecting towards or into the channel.

In embodiments the mount further comprises at least one fastener for fastening the mount to another object.

In embodiments the fastener comprises a jubilee clip to secure the mount to another object.

In an embodiment the fastener can alternatively or additionally take the form of one or more through holes provided in a side wall or base of one or both of the channels, allowing screws to be used for attaching the mount to the other object.

In an embodiment the main body further comprises a cushioning means.

In an embodiment the cushioning means comprises a polymer material.

In another embodiment there is provided a kit comprising a mount as described above and a security device having the predetermined cross-section.

In an embodiment the protrusion is configured to hook into a recess in a crossbar section of the security device.

In an embodiment the security device is mounted to an elongate component such that it is in a geometric plane of the frame of a vehicle.

In an embodiment the vehicle is a bicycle or a motorbike.

In another embodiment there is provided a vehicle having a mount as described above and mounted to an elongate component, such as a frame component or tube thereof.

According to another embodiment there is provided a computer-readable medium storing data which defines a digital representation of the mount of any of claims 1 to 10. In another embodiment the computer-readable medium further stores data which also defines operating instructions adapted to control an additive manufacturing device to fabricate the product using the digital representation of the product when said data is relayed to the AM device.

According to another embodiment there is provided a method of mounting a security device to the afore described mount. The method comprises fastening the mount to the elongate component, sliding a shackle section of the security device through the through-hole at an angle, attaching a crossbar section of the security device to the shackle section, rotating the security device such that the shackle section come to lie in the first and second sections and securing the crossbar section via the retaining means.

The invention will now be described by way of example and with reference to the accompanying drawings wherein:
Fig. 1A is a front view of an embodiment of the mount;
Fig. 1B is a left side view of the mount;
Fig. 1C is a Back view of the mount;
Fig. 1D is a top view of the mount;
Fig. 2A is a front view of another embodiment of the mount;
Fig. 2B is a left side view of the mount;
Fig. 2C is a Back view of the mount;
Fig. 2D is a top view of the mount;
Figs. 2E are perspective views of the mount;
Fig. 3A shows a first step of a process of locking a D-Lock to the mount;
Fig. 3B shows a second step of a process of locking the D-Lock to the mount; and
Fig. 3C shows the D-Lock locked to the mount.

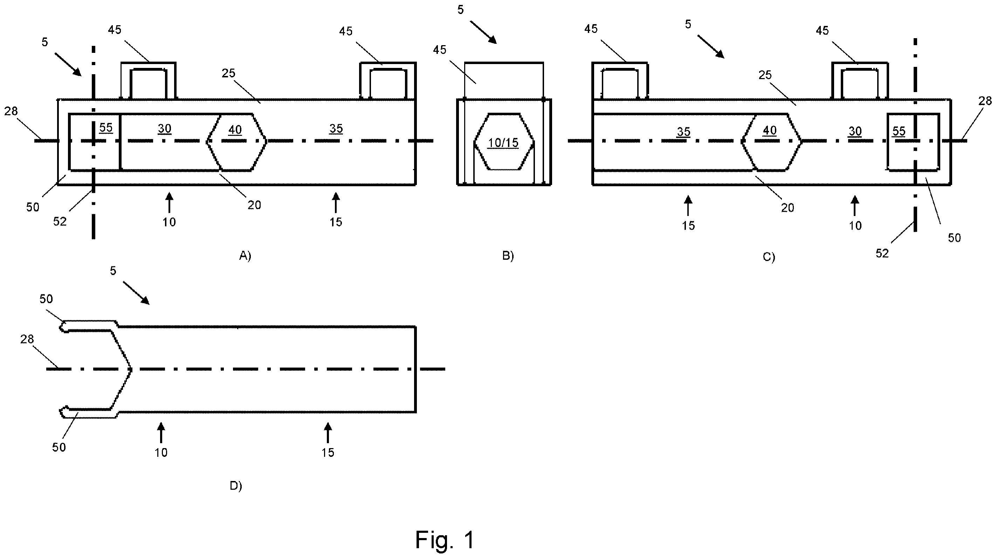

The mount 5 shown in Figs. 1A) to 1D) comprises two opposing channels 10 and 15. Each of these two channels 10 and 15. Each of the channels 10 and 15 has a first side wall that, jointly with a corresponding first side wall of the other one of channels 10 and 15 forms a continuous first side wall 20. Each of the channels 10 and 15 further has a second side wall that, jointly with a corresponding first side wall of the other one of channels 10 and 15 forms a continuous opposing second side wall 25. The two side walls 20 and 25 are shaped and spaced so that they can releasably engage a part of a lock that extends along a longitudinal axis 28 of the mount 5, such as a straight part of a shackle of a D-lock.

The side walls of the first channel 10 are connected with each other via a channel base 30. The side walls of the second channel 15 are connected with each other via a channel base 35. As can be seen from the figures, the channel bases 30 and 35 are located at opposite edges of the side walls 20 and 25, so that they oppose each other in a direction across a longitudinal direction of the channel. The channel bases 30 and 35 are, in the embodiment shown, also configured so that they do not extend along the full length of the channels 10 and 15 respectively and so that their adjacent edges instead form a through-hole 40. The shape and size of the through-hole is such that it permits for the shackle of the D-lock in an opened state to pass through the through-hole.

Although the channels 10/15 and the through-hole 40 are shown to have a hexagonal cross-section to accommodate D-locks with a hexagonal cross-sectioned shackle, it will be appreciated that other channel cross-sections are encompassed by embodiments. The channel cross-sections and through-holes can, for example, be rectangular or semi-circular or have a polygonal shape other than hexagonal. It will moreover be appreciated that, whilst spacing of the walls 20 and 25 is such that they releasably engage the shackle of the D-lock, the size of the through-hole 40 has to be suitably sized to allow the shackle of the D-lock to pass through the through-hole 40 in a substantially unencumbered manner. In another embodiment, the shape of the through-hole 40 may be different from the cross-sectional shape of the D-lock shackle.

In one embodiment the size and/or cross-sectional shape of the channel 10 and/or 15 corresponds to or is similar to that of the cross-section of the security device to be inserted in a manner that ensures a snug fit of the security device in the channel or, more preferably, a friction fit of the security device in the channel.

Whilst the embodiment shown in Fig. 1 illustrates side walls 20/25 that have their widest spacing from each other along their edges that are spaced furthest away from the respective channel base 30/35, it will be appreciate that in other embodiments the side walls 20/25 can be angled towards each other so that they are spaced further apart from each other where they contact the channel base 30/35 than at their free edges opposite the respective channel bases 30/35. In one embodiment the side walls 20 or 25 are only so angled along the length of one of the channels 10/15 or only partially along the length of one or both of the channels 10/15.

Alternatively or additionally, one or both of the edges of the side walls 20/25 on either or both of channels 10/15 may comprise one or more inwardly projecting protrusions that narrow the respective channel 10/15 so that the widest point of the channel is located between the channel base 30/35 and the edge of the side wall opposite of the channel base. Such alternative arrangements further engagement of the channel with the shackle of the D-lock.

The mount 5 further comprises two connectors 45. In the embodiment the connectors take the form of loops comprising apertures that permit fasteners, for example fastening straps to be passed through for securing the mount 5 to another object, for example to a tube of a bicycle frame. The strap is may comprises a polymer material. In one embodiment, the straps are augmented with jubilee-style clips to provide additional resistance against loosening. In another embodiment the mount 5 additionally or alternatively comprises through-holes that allow the mount 5 to be secured to a bicycle frame using screws. In one embodiment, such through holes are provided in one or both of side walls 20 and 25 and spaced to allow screws passing through them from inside channel 10/15 to the outside of the mount 5 to be screwed into standard bottle cage mount lug holes in bicycle frames.

In an embodiment the mount 5 further comprises a retainer 50 at one end of channels 10/15. In the embodiment the retainer 50 is a form of a clamp (as shown in Fig. 1D)) sized to releasably engage the lock body of a D-lock and to thereby prevent the shackle of the D-Lock from sliding along the length of the channel 10/15 and/or prevent a rotation of the D-Lock away from alignment of the shackle with the longitudinal axis 28 of the channel sensor 15. The retainer 50 defines a space that has a longitudinal axis 52 that extends at a non-zero angle relative to the longitudinal axis 28 of the mount 5. In the embodiment the angle is 90 degrees.

As can be seen from Figs. 1A) and 1C), the retainer comprises an aperture 55 so that the longitudinal opening in channel 10 is continued beyond the end of the channel. This aperture 55, whilst not essential, it's useful in allowing rotation of the shackle of the D-Lock it channel after insertion of the shackle through aperture 40.

In other embodiments, the retainer 50 may be shaped differently. In particular, a different manner of preventing sliding off the shackle of the D-Lock long length of the channel 10/15 is to shape the retainer 50, so that protrudes into or across a projection of the channel's cross-section along the longitudinal axis 28 of the channels 10/15.

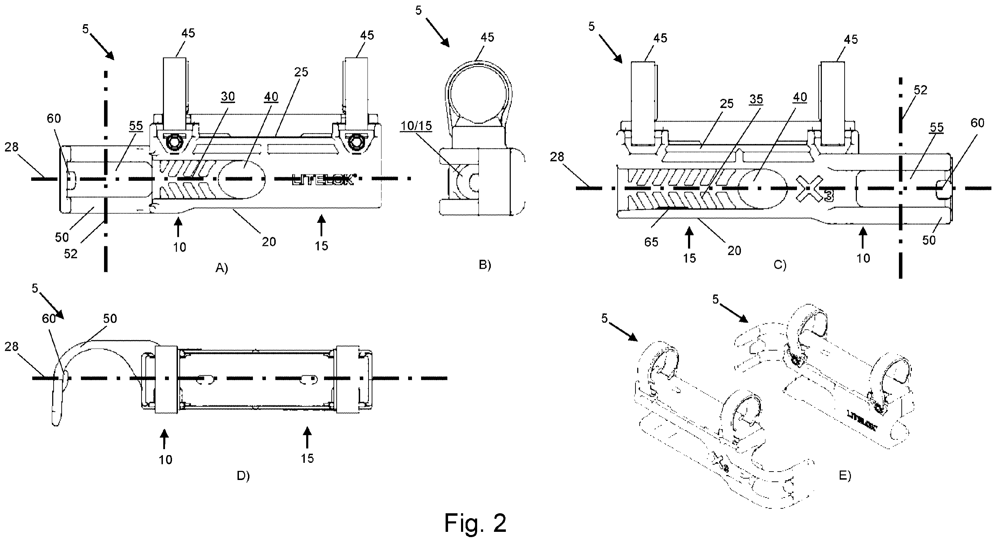

A further embodiment of the mount 5 is discussed with reference to Figs. 2A) to 2E). Like reference numerals are used for like components when compared to the embodiments discussed above with reference to Figs. 1A) to 1D). In addition to the elliptical channel shape of the mount shown in Figs. 2A) to 2E), the shape of the retainer 50 of the embodiment also differs from that of the embodiment illustrated in Figs. 1A) to 1D). In particular, the retainer 50 provides an end stop to the channel 10/15 that prevents the shackle of the D-lock sliding in the channel 10/15 in the direction towards the retainer 50. Moreover, the opening 55 surrounded by the retainer 50 is shaped and sized so as to be able to accommodate and/or releasably engage the lock body of a D-Lock. In this manner, sliding of the shackle of the D-Lock in the direction away from the retainer 50 is also prevented.

The retainer 50 moreover comprises a protrusion 60 projects into and towards the channel 10/15. The protrusion 60 is provided to coincide with a recess in the lock body off the D-lock to, when the D-Lock is mounted in the mount 5, the protrusion 60 comes to engage with the recess in the lock body of the D-lock. Through this engagement rotation of the shackle of the D-lock away from alignment with the longitudinal axis 28 of the mount 5 is inhibited.

Although the channels 10/15 and the through-hole 40 are shown to have an elliptical cross-section to accommodate D-locks with a circular or elliptical cross-sectioned shackle, it will be appreciated that other channel cross-sections are encompassed by embodiments. The channel cross-sections and through-holes can, for example, be circular, rectangular or semi-circular or have a polygonal shape. It was found that the use of an elliptically cross-sectioned channel to accommodate a circularly cross-sectioned shackle is particularly advantageous as it reduces residual movement of the shackle in the mount 5.

It will moreover be appreciated that, whilst spacing of the walls 20 and 25 is such that they releasably engage the shackle of the D-lock, the size of the through-hole 40 has to be suitably sized to allow the shackle of the D-lock to pass through the through-hole 40 in a substantially unencumbered manner. In another embodiment, the shape of the through-hole 40 may be different from the cross-sectional shape of the D-lock shackle. Irrespective of whether the shape of the through-hole 40 corresponds with or differs from the cross-sectional shape of the security device to be held by the mount 5, the shape of the through-hole 40 may, in the alternative to the hexagonal or elliptical shapes shown in the illustrated embodiments, have a square, circular or polygonal shape other than hexagonal.

As can be seen from Fig. 2C, the mount 5 of the embodiment comprises a protrusion 65 that extends from side wall 20 into the channel 15 along part of the length of channel 15. This protrusion 65 is located close to/along the free edge of the side wall 20, i.e. close to/along the edge of side wall 20 spaced furthest apart from the base 35 of channel 15. It will be appreciated that the protrusion 65 does not need to be located immediately adjacent the free edge of either side wall of channel 15.

Alternatively, in another embodiment, the protrusion is located in an upper half of at a side wall height above/spaced away from to the base of the channel. In this embodiment it is important that the side walls define an large opening width at about half the side wall height to either comfortably or snuggly accommodate or to provide a friction fit with the cross-section of the security device when it is fully inserted in the channel 15, i.e when a longitudinal axis of the security device aligns with longitudinal axis 28. The protrusion 65 then provides a narrowing of the channel width further away from the channel base 35 then the mid-point between the free edge of the side wall 20 and the channel base 35, so as to provide snap fit retention of the security device in the channel 15.

In an embodiment the protrusion 65 comprises a ramp inclined at an acute angle relative to the side wall 20 on its side opposite to the channel base 35. This ramp allows the side wall 20 to be forced outwardly when the security device is inserted into the channel 15 in the manner discussed in more detail below and, once the widest part of the security device has travelled past the ramp, resiliently return to its original position to hold the security device in a snap fit manner. This is particularly advantageous in embodiments in which the mount 5 is formed of a resilient material, such as of a plastic and in particularly an injection moulding plastic.

Alternatively or additionally, the protrusion 65 comprises a ramp inclined at an acute angle relative to the side wall 20 on the side of the channel base 35 to facilitate removal of the security device from the channel 15 in the same manner as described above in the context of the insertion of the security device into the channel 15.

More generally, protrusions identical or similar to protrusion 65 are provided in embodiments in the above described manner on one or more or all of a) side wall 20 of channel 15, b) side wall 25 of channel 15, c) side wall 20 of channel 10 and d) side wall 25 of channel 10.

In embodiments in which a part of the security device is releaseably engaged/retain by retainer 50 on one side of the through-hole 40 it is particularly advantageous to provide protrusions, such as protrusion 65 on the other side of the through-hole 40, that is on side wall 20 and/or on side wall 25 of channel 15.

Although protrusion 65 is shown as a continuous or elongated single protrusion in Fig. 2C), in other embodiments, the protrusion may be shorter, for example so that the length of the protrusion along the longitudinal direction fo the channel 10/15 is the same as its length in a direction towards/away from the base 30/35 of the channel 10/15.

In yet further embodiments more than one protrusion 65 may be provided in the above described manner on one or more of the side walls.

Whilst the protrusion 65 is illustrated in the context of the embodiment of Figs. 2A) to 2E), in another embodiment the ramp is provided in other embodiments, such as the embodiment shown in Figs. 1A) to 1D).

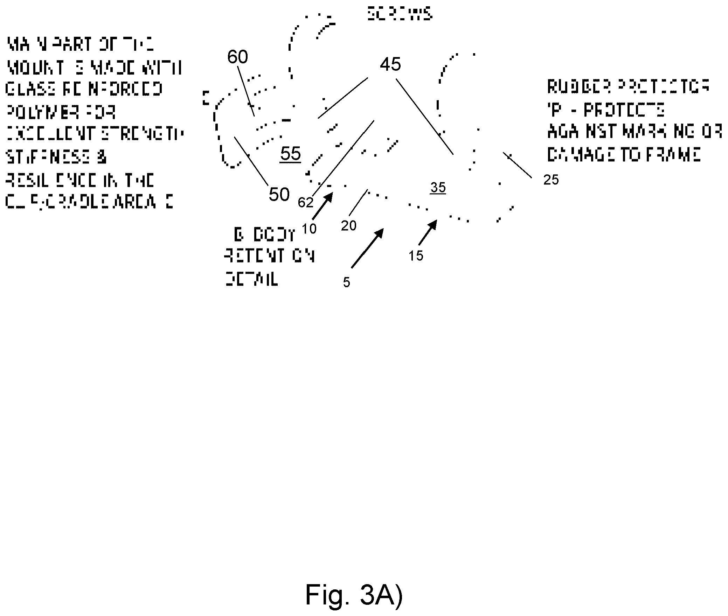

In some embodiments a cushioning element 62 is disposed between the mount 5 and the tube of the bicycle frame and extending substantially parallel to the longitudinal axis 28 of the mount 5. A lower surface of cushioning element 62 is in contact with an outer surface of the mount 5 that is parallel to the side wall 25 while an upper surface of the cushioning element 62 is in contact with the tube of the bicycle frame. The cushioning element 62 further comprises wings at each end that are disposed specifically between the connectors 45 and the tube of the bicycle frame. The cushioning element 62 consists of a resilient material which mitigates the effect of impacts and reduces the transmission of vibrations from the bicycle frame to the mount 5. For easy of illustration the cushioning element is shown in Fig. 3A).

A process for mounting a security device in the mount 5 is discussed in the following with reference to Fig. 3A). Fig. 3A) shows the mount 5 in the absence of a D-lock and mounted to a tube of a bicycle frame using fastening straps.

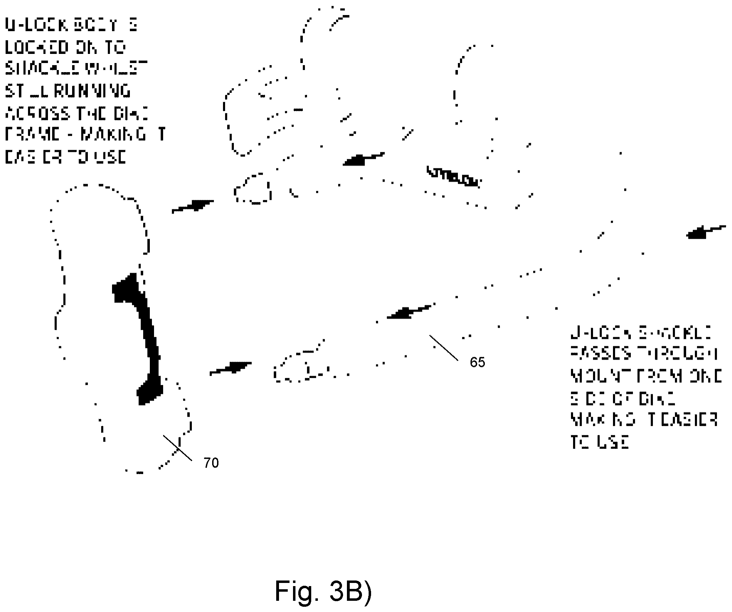

As shown in Fig. 3B), the shackle 65 of a D-Lock can be inserted through the aperture 40 when the D-Lock is in an open state. Once the shackle 65 has been inserted through the aperture 40 the lock body 70 of the D-Lock can be locked onto the shackle 65. Insertion of the shackle 65 through the aperture 40 inevitably happens at an angle, for example an acute angle, relative to the longitudinal axis 28 of the mount 5. This is advantageous, as, following this insertion the lock body 70 can be locked to the shackle 65 whilst the D-Lock lies in a plane that does not coincide with the plane defined by the bike frame. This is advantageous as the bike frame does not pose a special limitation to the use of the D-Lock key in the lock body 70 during locking. Other known bike mounts require that a lock is locked whilst it occupies the plane defined by the bike frame. Such other known bike mounts are consequently required to be mounted in a position that allows the use of the lock key between a lock body and the bike frame. This limitation is avoided by the embodiments.

It will be appreciated that, whilst the embodiments shown in Figs. 1 and 2 show an aperture 40 that provides a free opening sized to allow the shackled of the D-Lock to pass into the channel 10/15 when viewed from the front/back/in a direction orthogonal to the longitudinal axis 28 of the mount 5, this is not essential. In other embodiments, the aperture may alternatively be such that the shackle of the D-Lock cannot pass through it in a direction orthogonal to the longitudinal direction of the mount 5 but instead can pass through the aperture 40 only at an acute angle relative to the longitudinal direction of the mount 5.

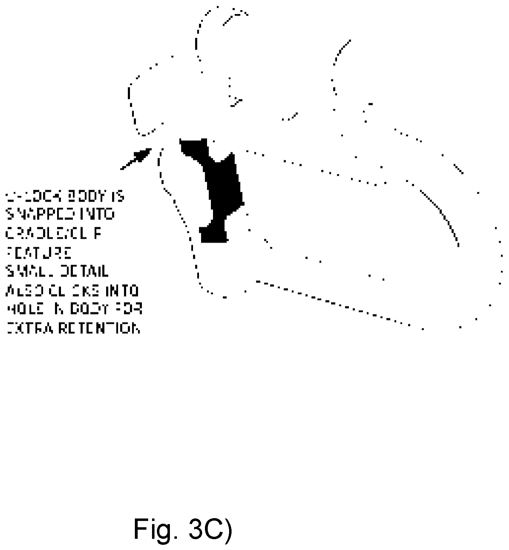

As shown in Fig. 3C), after the block body 70 has been locked onto the shackle 65, the D-Lock can be rotated about an axis orthogonal to the longitudinal axis 28 of the mount 5 so that a longitudinal axis of the part of the shackle 65 of the D-Lock within the channel 10/15 coincides with the longitudinal axis 18 of the mount 5 and/or releasably engages with the channel 10/15 and/or the lock body 70 comes to lie in the space defined by the retainer 50 and/or is releasably engaged by it.

It will be appreciated by a person skilled in the art that variations and/or modifications (e.g., additions, omissions, substitutions, etc.) may be made to the described and/or illustrated embodiments to provide other embodiments. The described and/or illustrated embodiments should therefore be considered in all respects as illustrative, not restrictive. Other features and aspects of the disclosure will become apparent by consideration of the detailed description and accompanying drawings. Any feature(s) described herein in relation to one aspect or embodiment may be combined with any other feature(s) described herein in relation to any other aspect or embodiment as appropriate and applicable. As used herein, term of degree such as "generally", "about", "substantially", or the like, are used, depending on context, to account for manufacture tolerance, degradation, trend, tendency, imperfect practical condition(s), etc.
- 5: mount
- 10: channel
- 15: channel
- 20: side wall
- 25: side wall
- 28: longitudinal axis (mount)
- 30: channel base
- 35: channel base
- 40: through-hole
- 45: connector
- 50: retainer
- 52: longitudinal axis (retainer)
- 60: protrusion
- 62: cushioning element
- 65: shackle
- 70: lock body

## Claims

1. A mount for a security device, the mount configured to releasably engage a security device having a predetermined cross-section, the mount comprising an elongated channel comprising a first portion and a second portion, the second portion adjacent the first portion along a length of the mount and separated from the first portion by a through-hole, through which a security device having the predetermined cross-section can be inserted at an angle relative to a longitudinal axis of the channel and rotated for alignment and engagement with the channel.

2. A mount according to claim 1, wherein the first portion and/or the second portion of the channel are configured to provide said releasable engagement.

3. A mount according to claim 1, wherein a part or all of a longitudinal length of the first portion and/or of part or all of a longitudinal length of the second portion of the channel comprises a wide portion and a narrower portion, wherein the narrower portion is further spaced away from the base of the channel than the wider portion.

4. A mount according to claim 1, 2 or 3, further comprising a retainer at one end of the channel.

5. A mount according to any preceding claim wherein the retainer comprises a cradle defining a space with a longitudinal axis that is orthogonal to the longitudinal axis of the mount.

6. A mount according to claim 5 wherein the cradle further comprises a protrusion at a distal end of the channel and projecting towards or into the channel.

7. A mount according to any preceding claim further comprising at least one fastener for fastening the mount to another object.

8. A mount according to claims 5, wherein the fastener comprises a jubilee clip to secure the mount to another object.

9. A mount according any preceding claim wherein the main body further comprises a cushioning means.

10. A mount according to claim 9, wherein the cushioning means comprises a polymer material.

11. A kit comprising a mount according to any preceding claim and a security device having the predetermined cross-section.

12. A kit according to claim 9 as dependent from claim 6 wherein the protrusion is configured to hook into a recess in a crossbar section of the security device.

13. A kit according to claims 9 or 10, wherein the security device is mounted to an elongate component such that it is in a geometric plane of the frame of a vehicle.

14. A kit according to claim 11, wherein the vehicle is a bicycle.

15. A vehicle having a mount according to any of Claims 1 to 8 mounted to an elongate component thereof.
